# EUROPÄISCHE PATENTSCHRIFT

(11) **EP 2 172 345 B1**
(45) Veröffentlichungstag und Bekanntmachung des Hinweises auf die Patenterteilung: **12.01.2011**
(21) Anmeldenummer: 08405248.9
(22) Anmeldetag: 02.10.2008
(51) Int. Cl.: B42C 9/00, B42C 19/08, B65G 17/32, B65H 5/08

(54) **Verfahren zur Herstellung von klebegebundenen Buchblocks, sowie Vorrichtung zur Durchführung des Verfahrens**
Method for manufacturing book blocks joined together with adhesive and device for executing the method
Procédé de fabrication d'un bloc de livres reliés par collage et dispositif d'exécution du procédé

(43) Veröffentlichungstag der Anmeldung: 07.04.2010
(73) Patentinhaber: Müller Martini Holding AG, 6052 Hergiswil (CH)
(72) Erfinder: Langenegger, Daniel, 4802 Strengelbach (CH); Boos, Konrad, 9507 Stettfurt (CH)

(56) Entgegenhaltungen:
- EP-A- 1 669 312
- EP-A- 1 834 911
- EP-A- 1 886 832
- WO-A-96/32293
- CA-A1- 2 258 089
- DE-A1- 2 810 518
- FR-A- 2 206 748
- GB-A- 973 639
- US-A- 5 005 815
- US-A- 5 261 520

## Beschreibung

Die Erfindung betrifft ein Verfahren zur Herstellung von klebegebundenen Buchblocks für Bücher oder dgl. Druckerzeugnisse mittels Klebebindeeinrichtung, die an einer Umlaufbahn in Abständen hintereinander angetriebene Klammern aufweist, denen auf einem Überführungsabschnitt die aus zusammengetragenen Druckbogen gebildeten losen Buchblocks in Fördereinheiten gleichen Abstandes und quer zur Förderrichtung sich erstreckend beim/vor dem Erreichen des Oberführungsabschnittes unterhalb der Umlaufbahn der Klebebindeeinrichtung zugeführt und in den Klammern mit nach unten gerichteten Rücken eingespannt zur weiteren Verarbeitung in aufgestellter Lage in der Klebebindeeinrichtung transportiert werden.

Verfahren der Klebebindung sind seit längerer Zeit bekannt und werden für die Herstellung von Zeitschriften, Büchern, Taschenbüchern, Katalogen oder ähnlichen Druckerzeugnissen angewendet. Dabei werden in einem ersten Schritt einzelne Druckbogen in einer vorbestimmten Reihenfolge zu losen Buchblocks gesammelt und anschliessend in einen Klebebinder überführt, wo der Rückenbereich der Druckbogen bearbeitet, Klebstoff aufgetragen und der Umschlag an den Rücken angeklebt wird. Als abschliessende Operation wird üblicherweise das roh gebundene Druckerzeugnis an den übrigen drei Seitenkanten auf Fertigmass sauber beschnitten.

Bei einem ersten Verfahren nach dem Stand der Technik werden die Druckbogen in einem Förderkanal einer Zusammentragmaschine gesammelt, wobei die Rücken der Druckbogen parallel zur Förderrichtung ausgerichtet sind und in einem Klebebinder in umlaufend geführten und angetriebenen Klammern unter Beibehaltung dieser Ausrichtung an Bearbeitungsstationen vorbeigefördert, durch diese bearbeitet und mit einem Umschlag versehen werden. Die Ausrichtung der Rücken parallel zur Förderrichtung ergibt eine einfache Übergabe der Druckbogen in den Klebebinder und einfache Verarbeitungsstationen im Klebebinder. Die maximal mögliche Produktionsgeschwindigkeit wird dabei durch die maximal mögliche Fördergeschwindigkeit im Sammelkanal der Zusammentragmaschine begrenzt, bei der leichte Druckbogen infolge von Strömungsturbulenzen vom darunter liegenden Stapel abgehoben werden können. Eine derartige Zusammentragmaschine ist in der EP 1 520 817 A1 ausführlich beschrieben.

Die EP 0 675 005 B1 beschreibt einen Klebebinder, dessen Aufnahmeteile quer zur Umlaufrichtung ausgerichtet und kontinuierlich angetrieben sind, bei der Zuführstelle in jedes vorbeilaufende Aufnahmeteil ein Druckereiprodukt einführbar ist, die Bearbeitungsstationen dazu bestimmt sind, auf jedes an ihnen vorbeitransportierte Druckereiprodukt einzuwirken, und Bearbeitungsstationen Werkzeuge aufweisen, die mit den Druckereiprodukten in Umlaufrichtung wenigstens abschnittweise mitlaufen und während des Mitlaufens diese bearbeiten. Durch die Förderung und Übergabe der Druckbogen mit quer zur Förderrichtung ausgerichteten Rücken kann die Leistung erhöht werden, wobei die mitlaufenden Bearbeitungsstationen sehr aufwändig in der Herstellung und störungsanfällig während dem Betrieb sind.

Nach einem weiteren, in der EP 1 886 832 A1 offenbarten Stand der Technik, werden die Druckbogen auf Sammeltischen mit quer zur Förderrichtung gerichtetem Rücken gesammelt, anschliessend beschleunigt, um 90° gedreht und längs laufend in einen längs laufenden Klebebinder überführt. Mit diesem Verfahren ist eine Steigerung der Leistung möglich. Nachteilig sind die erforderliche Vielzahl komplex aufgebauter Sammeltische und ein langer Überführungsbereich zwischen dem Sammelbereich und dem Klebebinder .

Nach einem weiteren, in der EP 1 886 833 A1 offenbarten Stand der Technik werden die Druckbogen auf Sammeltischen mit quer zur Förderrichtung gerichtetem Rücken gesammelt, anschliessend beschleunigt, um 90° gedreht, längs laufend von an einem Zugmittel befestigten Greifern übernommen und in einen längs laufenden Klebebinder überführt. Mit diesem Verfahren ist ebenfalls eine Steigerung der Leistung möglich. Nachteilig sind die erforderliche komplex aufgebaute Überführung und deren Länge zwischen dem Sammelbereich und dem Klebebinder.
US 5 261 520 und CA 2 258 089 gehören auch zum Stand der Technik.

Es ist Aufgabe der Erfindung, mit dem Rücken quer zur Förderrichtung gesammelte, lose Buchblocks mit hoher Produktionsgeschwindigkeit und Prozesssicherheit in eine Klebebindeeinrichtung zu überführen und durch diese mit nach unten gerichteten Rücken mit einfachen Verarbeitungsstationen zu bearbeiten.

Erfindungsgemäss wird diese Aufgabe dadurch gelöst, dass die Buchblocks in jeweils eine an einer senkrechten Achse um etwa 90° aus einer der Verarbeitungspositionen der Buchblocks geschwenkten Klammer zum Festklemmen eingeführt werden.

Anschliessend werden das vorgeschlagene Verfahren und zur Durchführung des Verfahrens vorgesehene Vorrichtungen unter Bezugnahme auf die Zeichnung, auf die bezüglich aller in der Beschreibung nicht erwähnten Einzelheiten verwiesen wird, anhand von Ausführungsbeispielen erläutert. In der Zeichnung zeigen:
- Fig. 1: eine räumliche Ansicht einer erfindungsgemässen Klebebindeeinrichtung in einer ersten Ausfüh- rungsform,
- Fig. 2: eine räumliche Ansicht einer erfindungsgemässen Klebebindeeinrichtung in einer zweiten Ausfüh- rungsform,
- Fig. 3: eine Detailansicht des Überführungsabschnitts der Klebebindeeinrichtung nach Fig. 2,
- Fig. 4: eine räumliche Ansicht einer erfindungsgemässen Klebebindeeinrichtung in einer dritten Ausfüh- rungsform und
- Fig. 5: eine räumliche Ansicht einer erfindungsgemässen Klebebindeeinrichtung in einer vierten Ausfüh- rungsform.

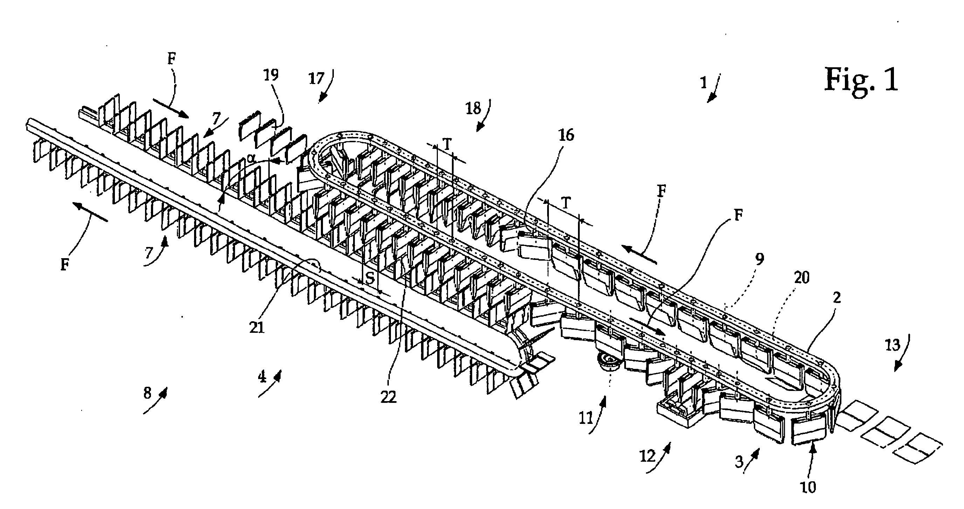

Die in den Fig. 1,2,4,5 dargestellten Klebebindeinrichtungen 1 sind vorgesehen zur Herstellung von aus Druckbogen 5 gebildeten, klebegebundenen Buchblocks 6 für Bücher oder dgl. Druckerzeugnisse 19. Dazu weisen die Klebebindeeinrichtungen 1 an einer endlosen Umlaufbahn 2 in veränderbare Abständen T hintereinander geführte und durch ein Zugmittel 20 angetriebene Klammern 3 zur Aufnahme der zu bearbeitenden losen Buchblocks 6 auf, die an Verarbeitungsstationen der Klebebindeeinrichtung 1 vorbeigeführt und durch diese bearbeitet werden. In den Fig. 1,2,4,5 sind beispielhaft ein Fräswerk 11, ein Rückenleimwerk 12 und eine Umschlagzuführung 13 als Verarbeitungsstationen dargestellt, wobei jedoch noch weitere Verarbeitungsstationen denkbar sind, wie zusätzliche Fräswerke 11, Rückenleimwerke 12, Seitenleimwerke, Fälzelstationen und Rückenform- oder Anpressstationen. Die Ausstattung der Klebebindeeinrichtung 1 mit Verarbeitungsstationen wird weitgehend durch das für die Herstellung der Druckerzeugnisse 19 vorgegebene Bindeverfahren bestimmt.
Die durch die Klebebindeeinrichtung 1 zu bearbeitenden Druckbogen 5 werden zuerst in einer nicht dargestellten Zusammentrageinrichtung in einer vorgegebenen Reihenfolge zu losen Buchblocks 6 gesammelt, auf einem der Zusammentrageinrichtung nach- und der Klebebindeeinrichtung 1 vor- geschalteten Überführungsabschnitt 4 mit einer Fördervorrichtung 8 zu den Klammern 3 der Klebebindeeinrichtung 1 taktsynchron gefördert, während der Förderung ausgerichtet und in die Klammern 3 der Klebebindeeinrichtung 1 überführt.

Die Fördervorrichtung 8 wird gebildet durch sich quer zur Förderrichtung F erstreckende und in Abständen S sich folgende, in einer geschlossenen Führungsbahn 21 geführte Fördereinheiten 7, in denen die Druckbogen 5 auf einem den Verarbeitungsstationen der Klebebindeeinrichtung 1 vorgeschalteten Überführungsabschnitt 4 zu den Klammern 3 taktsynchron gefördert werden. Die losen Buchblocks 6 sind beim/ vor dem Erreichen des Überführungsabschnittes 4 unterhalb der Umlaufbahn 2 der Klebebindeeinrichtung 1 in liegender oder aufgestellter Lage ausgerichtet und werden in jeweils eine an einer senkrechten Achse 9 um etwa 90° aus einer der Verarbeitungsposition der Buchblocks 6 geschwenkten Klammer 3 zum Festklemmen eingeführt. Im Überführungsabschnitt 4 der Umlaufbahn 2 sind die geöffneten Klammern 3 und die Buchblocks 6 in den Fördereinheiten 7 quer zur Förderrichtung F sich gegenüberliegend ausgerichtet. Die Abstände S der Fördereinheiten 7 und die Abstände T der Klammern 3 sind in Förderrichtung F zumindest im Überführungsabschnitt 4 gleich gross. Mittels einer Überführungsvorrichtung 14 werden die losen Buchblocks 6 im Uberführungsabschnitt 4 während der Förderung in Förderrichtung F quer zur Förderrichtung F von den Fördereinheiten 7 in die Klammern 3 der Klebebindeeinrichtung 1 überführt, wobei die Überführung der Buchblocks 6 in einem Winkel α zwischen 0° und 90° zur Längserstreckung des Überführungsabschnitts 4 mit einer Schiebebewegung erfolgt. Die Überführungsvorrichtungen 14 werden vorzugsweise durch an den Fördereinheiten 7 geführte Schiebeeinrichtungen 22 gebildet, die mittels entlang der Führungsbahn 21 angeordneten Steuerschienen antreibbar sind. Nach dem Überführungsabschnitt 4 werden die Klammern 3 wahlweise um die relativ zur Förderrichtung F senkrechten Achsen 9 in eine Verarbeitungsposition geschwenkt, sodass die Rücken 10 der Buchblocks 6 parallel zur Förderrichtung F ausgerichtet sind, passieren die Verarbeitungsstationen der Klebebindeeinrichtung 1 und werden zu roh gebunden Druckerzeugnissen 19 verarbeitet. Der Abstand T zwischen zwei benachbarten Klammern 3 wird hierzu vergrössert.

Für Klebebindeeinrichtungen 1 sind einfache Verarbeitungsstationen bekannt, die in Längsrichtung zum Rücken 10 passierbar sind. Es kann vorteilhaft sein, gewisse Verarbeitungsstationen mit quer laufenden Rücken 10 resp. Klammern 3 zu passieren. Es ist beispielsweise denkbar, das Rückenleimwerk 12 mit quer laufendem Rücken 10 zu passieren, womit die Lage und Länge der Rückenbeleimung in Rückenlängsrichtung ohne hochdynamisch beanspruchte, sondern mit still stehenden Leimrakeln erreichbar ist. Dadurch, dass die Klammern 3 in den Verarbeitungspositionen wahlweise längs oder quer zur Förderrichtung F angeordnet sein können, ergibt sich für erfindungsgemässe Einrichtungen ein zusätzlicher Nutzen.

Nach der Bearbeitung der Buchblocks 6 werden die Klammern 3, resp. Rücken 10 wieder quer zur Förderrichtung F ausgerichtet und die roh gebundenen Druckerzeugnisse 19 in einem Ausförderabschnitt 18 quer zur Förderrichtung F in einen Wegförderstrom 17 überführt und an ein nachfolgendes Fördersystem abgegeben.

Die Prozesssicherheit ist weitgehend abhängig von der Fördergeschwindigkeit der Buchblocks 6 in Förderrichtung F. Durch die Schwenkbarkeit der Klammern 3 um die senkrechte Achse 9 ergibt sich die Möglichkeit, bei quer laufenden Klammern 3 mit einem kleineren Abstand T als bei längs laufenden Klammern 3 zu fahren, womit sich bei gleicher Taktzahl die Fördergeschwindigkeit entsprechend reduzieren oder bei gleichbleibender Fördergeschwindigkeit die Taktzahl erhöhen lässt. Vorrichtungen, bei denen der Abstand T zwischen zwei benachbarten Klammern 3 veränderbar ausgeführt ist, sind im Stand der Technik wie beispielsweise der DE 10 2007 032 604 A1 bekannt.

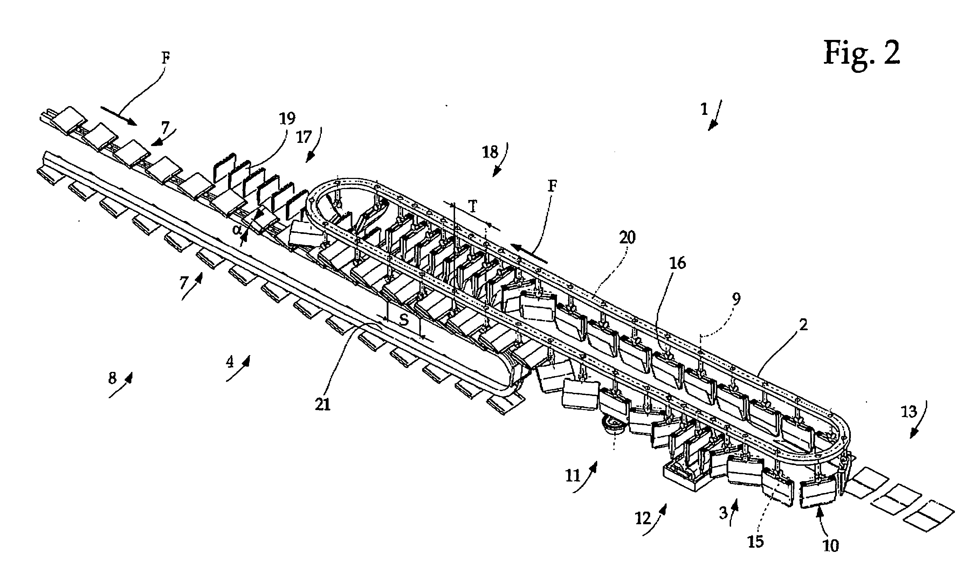

Bei der Ausführungsform nach Fig. 1 werden die gesammelten Druckbogen 5 in den Fördereinheiten 7 der Fördereinrichtung 8 stehend hintereinander gefördert und der Winkel α beträgt 45 bis 90°, wogegen bei der Ausführungsform nach Fig. 2 die gesammelten Druckbogen 5 in den Fördereinheiten 7 der Fördereinrichtung 8 liegend übereinander gefördert werden und der Winkel α zwischen 0 und 45° beträgt.

Bei der Ausführungsform nach Fig. 2, mit einem Winkel α, der kleiner ist als 45°, sind die Klammern 3 der Klebebindeeinrichtung 1 zusätzlich um bis zu 90° an einer horizontalen Achse 15 schwenkbar ausgebildet. Vor dem Erreichen des Überführungsabschnitts 4 werden die Klammern 3 um die horizontale Achse 15 aus der senkrechten in eine geneigte Lage verschwenkt, wobei der Neigungswinkel β der Klammern 3 in etwa dem Neigungswinkel α der liegend übereinander geförderten, zusammengetragenen Druckbogen 5 in den Fördereinheiten 7 der Fördereinrichtung 8 entspricht.

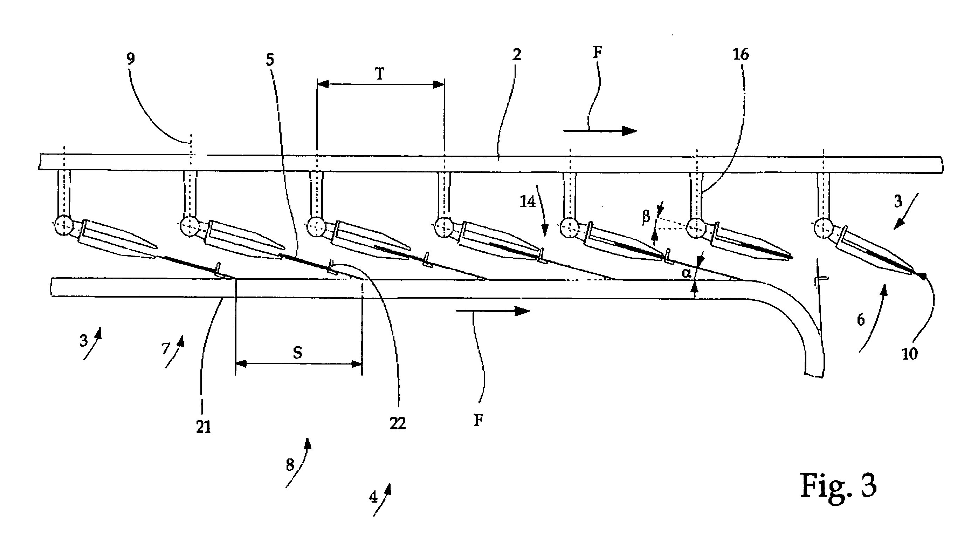

Bei der Förderung übereinander liegender Druckbogen 5 mit Fördereinheiten 7, welche einen Winkel α zwischen 0 und 45° aufweisen, können die Fördereinheiten 7 wesentlich einfacher gestaltet werden als bei Fördereinheiten mit einem Neigungswinkel zw. 45 und 90°, da auf nicht dargestellte, zusätzliche Stützelemente, die ein Umkippen der Druckbogen 5 verhindern, verzichtet werden kann. Dadurch ist die Zugänglichkeit zu den Druckbogen 5 in den Fördereinheiten 7 mit kleinem Winkel α besser als bei stehenden Fördereinheiten mit grossem Winkel α. Die Fig. 3 zeigt in vergrösserter Darstellung den Überführungsabschnitt 4 der Einrichtung gemäss Fig. 2.

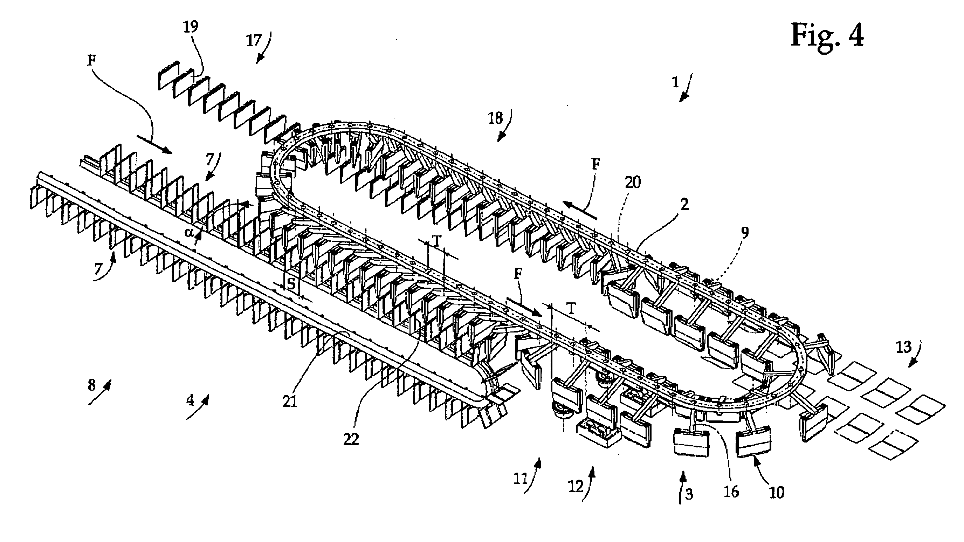

Bei der Ausführungsform nach Fig. 4 sind die senkrechten Achsen 9 der Klammern 3 ausserhalb der Klammern 3 angeordnet, wobei nach dem Überführungsabschnitt 4 die Klammern 3 jeweils abwechselnd in Uhrzeigersinn und Gegenuhrzeigersinn um bis zu 90° gedreht werden. Dadurch ergeben sich zwei parallele Reihen von hintereinander angeordneten Klammern 3, welche gegenüber dem Überführungsabschnitt 4 einen doppelt so grossen Abstand T aufweisen. Die Klammern 3 der beiden Reihen werden an separaten Verarbeitungsstationen vorbeigeführt und durch diese bearbeitet. Durch die Verteilung der Druckerzeugnisse 19 auf zwei parallele, identische Anordnungen von Verarbeitungsstationen ist eine weitere Erhöhung der Leistung erreichbar.

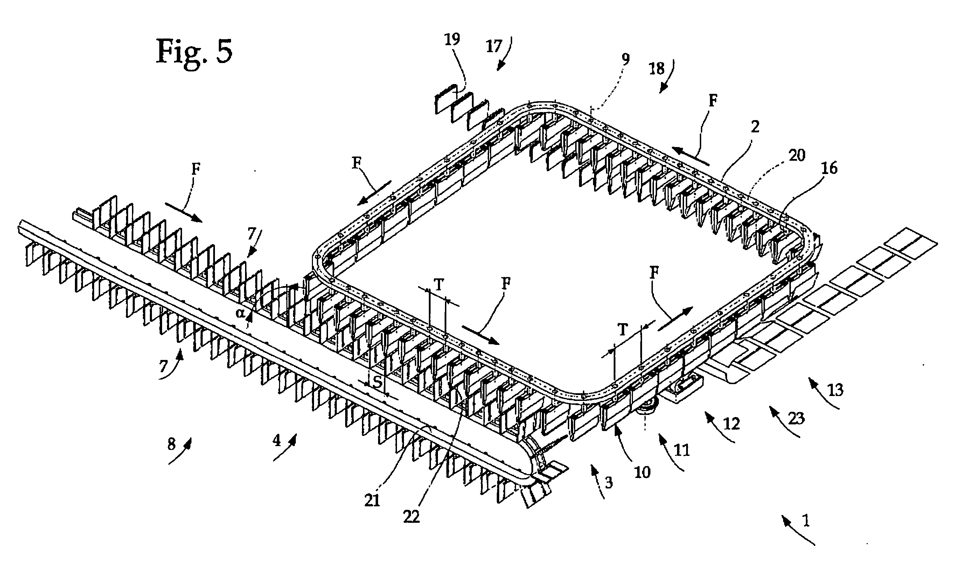

Die in Fig. 5 dargestellte Ausführungsform einer Klebebindeeinrichtung 1 entspricht im Wesentlichen der in Fig. 1 dargestellten Ausführungsform. Der Unterschied besteht darin, dass die Umlaufbahn 2 vier gerade Abschnitte aufweist, in denen Buchblocks zugeführt, bearbeitet oder entnommen werden können, wobei das Schwenken der Klammern 3 in den Kurvenpartien der Umlaufbahn 2 um die senkrechte Achse 9 derart erfolgt, dass die räumliche Ausrichtung der Klammern 3 erhalten bleibt. Die Klammer 3 dreht sich also in Bezug zu ihrer Umlaufbahn 2 um die senkrechte Achse 9. Nach der Überführung der Buchblocks 6 von den Fördereinheiten 7 in die Klammern 3 wird der Abstand T der Klammern 3 für den weiteren Verlauf auf einem gegenüber dem Überführungsabschnitt 4 abgewinkelten Abschnitt 23 der Umlaufbahn 2 vergrössert. Im abgewinkelten Abschnitt 23 können Verarbeitungsstationen angeordnet sein.
Es ist ebenfalls denkbar, die Klammern 3 innerhalb eines geraden Abschnitts analog zur Ausführungsform in der Fig. 1 zwischen Verarbeitungsstationen zu schwenken. Die Verschwenkbarkeit der Klammern 3 wird dadurch erreicht, dass diese nicht direkt am Zugmittel 20, sondern an einer zwischen den Klammern 3 und dem Zugmittel 20 vorgesehenen Aufhängung 16 befestigt sind.

Anstelle von zwei zueinander nicht parallelen Achsen 9, 15, wie sie in den Figuren 2 und 3 gezeigt sind, ist ebenfalls denkbar, die Klammern 3 um eine räumliche Achse zu schwenken, wobei die Ausrichtung der Klammern 3 während der Überführung und der Bearbeitung der Buchblocks 6 den dafür benötigten Ausrichtungen entsprechen muss.

## Patentansprüche

1. Verfahren zur Herstellung von klebegebundenen Buchblocks (6) für Bücher oder dgl. Druckerzeugnisse (19) mittels Klebebindeeinrichtung (1), die an einer Umlaufbahn (2) in Abständen (T) hintereinander angetriebene Klammern (3) aufweist, denen auf einem Überführungsabschnitt (4) die aus zusammengetragenen Druckbogen (5) gebildeten losen Buchblocks (6) in Fördereinheiten (7) gleichen Abstandes (S) und quer zur Förderrichtung (F) sich erstreckend beim/vor dem Erreichen des Überführungsabschnittes (4) unterhalb der Umlaufbahn (2) der Klebebindeeinrichtung (1) zugeführt und in den Klammern (3) mit nach unten gerichteten Rücken (10) eingespannt zur weiteren Verarbeitung in aufgestellter Lage in der Klebebindeeinrichtung (1) transportiert werden, **dadurch gekennzeichnet, dass** die Buchblocks (6) in jeweils eine an einer senkrechten Achse (9) um etwa 90° aus einer der Verarbeitungspositionen der Buchblocks (6) geschwenkten Klammer (3) zum Festklemmen eingeführt werden.

2. Verfahren nach Anspruch 1, **dadurch gekennzeichnet, dass** die Druckbogen (5) in den Fördereinheiten (7) der Fördervorrichtung (8) stehend hintereinander zu Buchblocks (6) zusammengetragen werden.

3. Verfahren nach Anspruch 1, **dadurch gekennzeichnet, dass** die Druckbogen (5) in den Fördereinheiten (7) der Fördervorrichtung (8) liegend übereinander zu Buchblocks (6) zusammengetragen werden.

4. Verfahren nach einem der Ansprüche 1 bis 3, **dadurch gekennzeichnet, dass** Fördereinheit (7) und Klammer (3) zur Überführung der Buchblocks (6) zueinander ausgerichtet sind.

5. Verfahren nach Anspruch 4, **dadurch gekennzeichnet, dass** die Überführung der Buchblocks (6) in einem Winkel (α) zwischen 0° und 90° zur Längserstreckung des Überführungsabschnitts (4) mit einer Schiebebewegung erfolgt.

6. Verfahren nach einem der Ansprüche 1 bis 5, **dadurch gekennzeichnet, dass** die Klammern (3) nach dem Überführungsabschnitt (4) in eine Verarbeitungsposition geschwenkt werden.

7. Verfahren nach einem der Ansprüche 1 bis 6, **dadurch gekennzeichnet, dass** die Klammern (3) in den Verarbeitungspositionen längs und/oder quer zur Förderrichtung (F) ausgerichtet sind.

8. Verfahren nach einem der Ansprüche 1 bis 7, **dadurch gekennzeichnet, dass** die Klammern (3) nach der Überführung der Buchblocks (6) unter Einhaltung der räumlichen Ausrichtung auf einem abgewinkelten Abschnitt (23) der Umlaufbahn (2) der Klebebindeeinrichtung (1) verarbeitet werden.

9. Verfahren nach einem der Ansprüche 1 bis 8, **dadurch gekennzeichnet, dass** der Abstand (T) der Klammern (3) nach der Überführung zur Verarbeitung der Buchblocks wahlweise vergrössert wird.

10. Vorrichtung zur Herstellung von aus klebegebundenen Druckbogen (5) gebildeten Buchblocks (6) für Bücher oder dgl. Druckerzeugnisse (19), mit einer Klebebindeeinrichtung (1), die an einer Umlaufbahn (2) in Abständen hintereinander angetriebene Klammern (3) zur Aufnahme von zu bearbeitenden losen Buchblocks (6) aufweist, die an Verarbeitungsstationen (11, 12) der Klebebindeeinrichtung (1) vorbeigeführt werden, und einer Fördervorrichtung (8) aus sich in Abständen folgenden Fördereinheiten (7), in denen die zusammengetragenen Druckbogen (5) sich quer zur Förderrichtung (F) erstreckend und auf einem den Verarbeitungsstationen der Klebebindeeinrichtung (1) vorgeschalteten Überführungsabschnitt (4) den Klammern (3) taktsynchron zugeführt werden, **dadurch gekennzeichnet, dass** die geöffneten Klammern (3) und die Fördereinheiten (7) auf dem Überführungsabschnitt (4) der Umlaufbahn (2) quer zur Förderrichtung (F) und sich gegenüberliegend ausgerichtet sind und dass die Fördereinheiten (7) mit einer Überführungsvorrichtung (14) ausgebildet sind.

11. Vorrichtung nach Anspruch 10, **dadurch gekennzeichnet, dass** die Überführungsvorrichtung (14) als Schiebeeinrichtung (22) ausgebildet ist.

12. Vorrichtung nach Anspruch 10 oder 11, **dadurch gekennzeichnet, dass** die an einem Zugmittel (20) befestigten Klammern (3), relativ zur Förderrichtung (F) an einer senkrechten Achse (9) verschwenkbar ausgebildet sind.

13. Vorrichtung nach Anspruch 12, **dadurch gekennzeichnet, dass** die Klammern (3) um 0° bis 90° an einer horizontalen Achse (15) schwenkbar ausgebildet sind.

14. Vorrichtung nach einem der Ansprüche 10 bis 13, **dadurch gekennzeichnet, dass** die Klammern (3) jeweils an einer Aufhängung (16) befestigt sind.

## Claims

1. Method for manufacturing book blocks (6) joined together with adhesive for books or similar printed products (19) by means of an adhesive binding device (1), which has clamps (3) driven one behind the other at a distance (T) from each other on a circulating path (2), to which the loose book blocks (6) made from collated printed sheets (5) are fed in conveying units (7) at an equal distance (S) from each other on a transfer section (4) crosswise to the conveying direction (F) extending below the circulating path (2) of the adhesive binding device (1) when/before reaching the transfer section (4) and are transported clamped in the clamps (3) with the back (10) facing downwards for further processing in a standing position in the adhesive binding device (1), **characterised in that** the book blocks (6) are each introduced into a clamp (3) swivelled on a perpendicular axis (9) round about 90° out of one of the processing positions of the book blocks (6) for clamping firmly.

2. Method according to claim 1, **characterised in that** the printed sheets (5) are collated into book blocks (6) standing one behind the other in the conveying units (7) of the conveying device (8).

3. Method according to claim 1, **characterised in that** the printed sheets (5) are collated into book blocks (6) lying on top of each other in the conveying units (7) of the conveying device (8).

4. Method according to one of claims 1 to 3, **characterised in that** the conveying unit (7) and the clamp (3) are aligned with each other for transferring the book blocks (6).

5. Method according to claim 4, **characterised in that** the book blocks (6) are transferred at an angle (α) of between 0° and 90° to the longitudinal extent of the transfer section (4) with a pushing movement.

6. Method according to one of claims 1 to 5, **characterised in that** the clamps (3) are swivelled into a processing position after the transfer section (4).

7. Method according to one of claims 1 to 6, **characterised in that** the clamps (3) are aligned in the processing positions lengthwise and/or crosswise to the conveying direction (F).

8. Method according to one of claims 1 to 7, **characterised in that** after transferring the book blocks (6) the clamps (3) are processed on an angled section (23) of the circulating path (2) of the adhesive binding device (1) whilst maintaining the spatial alignment.

9. Method according to one of claims 1 to 8, **characterised in that** the distance (T) between the clamps (3) is increased selectively after the book blocks have been transferred for processing.

10. Device for manufacturing book blocks (6) made of printed sheets (5) joined together with adhesive for books or similar printed products (19), with an adhesive binding device (1), which has clamps (3) driven one behind the other at a distance from each other on a circulating path (2) for picking up loose book blocks (6) to be processed, which are taken past to processing stations (11, 12) of the adhesive binding device (1), and a conveying device (8) made of conveying units (7) following each other at a distance from each other, in which the collated printed sheets (5) are fed synchronously to the clamps (3) on a transfer section (4) upstream of the processing stations of the adhesive binding device (1) extending crosswise to the conveying direction (F), **characterised in that** the open clamps (3) and the conveying units (7) on the transfer section (4) of the circulating path (2) are aligned opposite each other crosswise to the conveying direction (F) and that the conveying units (7) are made with a transfer device (14).

11. Device according to claim 10, **characterised in that** the transfer device (14) is made as a pushing device (22).

12. Device according to claim 10 or 11, **characterised in that** the clamps (3) fastened on a traction mechanism (20) are made to be able to swivel on a perpendicular axis (9) in relation to the conveying direction (F).

13. Device according to claim 12, **characterised in that** the clamps (3) are made to be able to swivel round 0° to 90° on a horizontal axis (15).

14. Device according to one of claims 10 to 13, **characterised in that** the clamps (3) are each fastened to a suspension (16).

## Revendications

1. Procédé de fabrication de corps d'ouvrages (6) à reliure encollée, destinés à des livres ou à des produits d'impression (19) similaires, au moyen d'un système (1) de reliage par collage muni de crampons (3) entraînés sur une piste (2) en révolution, à intervalles (T) les uns derrière les autres, et auxquels lesdits corps d'ouvrages (6) à l'état lâche, constitués par des feuillets d'impression (5) rassemblés, sont délivrés sur un segment de transfert (4) dans des unités de convoyage (7) espacées d'une même distance (S) et s'étendant transversalement par rapport à la direction de convoyage (F), au-dessous de ladite piste (2) en révolution dudit système (1) de reliage par collage, lorsqu'ils atteignent/avant d'atteindre ledit segment de transfert (4), puis sont transportés à l'état enserré dans lesdits crampons (3), dans lesquels leurs dos (10) sont dirigés vers le bas, en vue du traitement ultérieur en position dressée verticalement dans ledit système (1) de reliage par collage, **caractérisé par le fait que** les corps d'ouvrages (6) sont insérés, afin d'être coincés fermement, dans un crampon respectif (3) auquel un pivotement d'environ 90° est imprimé, sur un axe vertical (9), à partir de l'un des emplacements de traitement desdits corps d'ouvrages (6).

2. Procédé selon la revendication 1, **caractérisé par le fait que** les feuillets d'impression (5) sont rassemblés, pour former des corps d'ouvrages (6), en succession verticale dans les unités de convoyage (7) du dispositif de convoyage (8).

3. Procédé selon la revendication 1, **caractérisé par le fait que** les feuillets d'impression (5) sont rassemblés, pour former des corps d'ouvrages (6), en superposition horizontale dans les unités de convoyage (7) du dispositif de convoyage (8).

4. Procédé selon l'une des revendications 1 à 3, **caractérisé par le fait qu'**une unité de convoyage (7) et un crampon (3) sont mutuellement alignés en vue du transfert des corps d'ouvrages (6).

5. Procédé selon la revendication 4, **caractérisé par le fait que** le transfert des corps d'ouvrages (6) a lieu par un mouvement de poussée, selon un angle (α) compris entre 0° et 90° vis-à-vis de l'étendue longitudinale du segment de transfert (4).

6. Procédé selon l'une des revendications 1 à 5, **caractérisé par le fait que** les crampons (3) sont animés, après le segment de transfert (4), d'un pivotement les amenant à un emplacement de traitement.

7. Procédé selon l'une des revendications 1 à 6, **caractérisé par le fait que** les crampons (3) sont orientés, aux emplacements de traitement, longitudinalement et/ou transversalement par rapport à la direction de convoyage (F).

8. Procédé selon l'une des revendications 1 à 7, **caractérisé par le fait que** les crampons (3) sont traités, après le transfert des corps d'ouvrages (6), en conservant l'orientation dans l'espace sur un tronçon coudé (23) de la piste (2) en révolution du système (1) de reliage par collage.

9. Procédé selon l'une des revendications 1 à 8, **caractérisé par le fait que** l'intervalle (T) séparant les crampons (3) est accru sélectivement, à l'issue du transfert, en vue du traitement des corps d'ouvrages.

10. Dispositif de fabrication de corps d'ouvrages (6) constitués par des feuillets d'impression (5) à reliure encollée et destinés à des livres ou à des produits d'impression (19) similaires, comprenant un système (1) de reliage par collage muni de crampons (3) entraînés sur une piste (2) en révolution, à intervalles les uns derrière les autres, et conçus pour recevoir des corps d'ouvrages (6) à l'état lâche, devant être traités, guidés en regard de postes de traitement (11, 12) dudit système (1) de reliage par collage ; et un dispositif de convoyage (8) composé d'unités de convoyage (7) qui se succèdent à intervalles et dans lesquelles lesdits feuillets d'impression (5) rassemblés, s'étendant transversalement par rapport à la direction de convoyage (F), sont délivrés auxdits crampons (3) avec cadence synchronisée sur un segment de transfert (4) situé en amont desdits postes de traitement dudit système (1) de reliage par collage, **caractérisé par le fait que** les crampons (3) ouverts, et les unités de convoyage (7), sont orientés transversalement par rapport à la direction de convoyage (F) et en vis-à-vis mutuel sur le segment de transfert (4) de la piste (2) en révolution ; et **par le fait que** lesdites unités de convoyage (7) sont pourvues d'un dispositif de transfert (14).

11. Dispositif selon la revendication 10, **caractérisé par le fait que** le dispositif de transfert (14) est réalisé sous la forme d'un système de poussée (22).

12. Dispositif selon la revendication 10 ou 11, **caractérisé par le fait que** les crampons (3) fixés à un moyen de traction (20) sont réalisés avec faculté de pivotement, sur un axe vertical (9), par rapport à la direction de convoyage (F).

13. Dispositif selon la revendication 12, **caractérisé par le fait que** les crampons (3) sont réalisés avec faculté de pivotement de 0° à 90°, sur un axe horizontal (15).

14. Dispositif selon l'une des revendications 10 à 13, **caractérisé par le fait que** les crampons (3) sont respectivement fixés à une suspension (16).
